# EUROPEAN PATENT SPECIFICATION

(11) **EP 2 785 812 B1**
(45) Date of publication and mention of the grant of the patent: **01.04.2020**
(21) Application number: 12795781.9
(22) Date of filing: 27.11.2012
(51) Int. Cl.: C09K 5/04

(54) **NOVEL USE FOR COMPOSITIONS COMPRISING HFC-134A AND HFO-1234YF**
NEUARTIGE VERWENDUNG FÜR ZUSAMMENSETZUNGEN UMFASSEND HFC-134A UND HFO-1234YF
NOUVELLE UTILISATION DE COMPOSITIONS COMPORTANT DU HFC-134A ET HFO-1234YF

(30) Priority: 01.12.2011 EP 11191468
(43) Date of publication of application: 08.10.2014
(73) Proprietor: Daikin Industries, Ltd., Osaka-shi, Osaka 530-8323 (JP)
(72) Inventor: FLOHR, Felix, 31134 Hildesheim (DE); RAU, Helge, 31303 Burgdorf (DE)
(74) Representative: Hoffmann Eitle
(86) International application number: PCT/EP2012/073665
(87) International publication number: WO 2013/079458

(56) References cited:
- WO-A1-2011/130237
- WO-A2-2011/056824
- US-A1- 2010 047 189
- US-A1- 2010 122 545

## Description

The present invention relates to a novel use of hydro fluorocarbon compositions, which are suitable, in particular as replacement or drop-in substitute for R-404A (is a HFC "nearly azeotropic" blend of 52 wt % R-143a, 44 wt % R-125, and 4 wt % R-134a), R-507 (is a 50-50 azeotropic blend of R-125 and R-143a) and R-22. The present invention also relates to a specific azeotropic composition.

R-404A and R-507 are useful refrigerants but they have a GWP (Global Warming Potential) of 3.300. R-22 has some impact on the ozone.

US patent application publication 20100047189 describes azeotrope-like compositions of HFO-1234yf and HFC-134a. HFO-1234yf is 2,3,3,3-tetrafluoropropene, CH₂=CF-CF₃. HFC-134a is 1,1,1,2-tetrafluoroethane, CF₃-CH₂F.

US-A1-2010/0122545 teaches the replacement of high GWP refrigerants with replacement hydrofluorocarbon compositions including a mixture of HFO-1234yf and HFC-134a.

The invention makes now available novel uses for refrigerant compositions having zero ozone depletion potential, which are suitable as R-404A and R-507 drop-in substitutes, especially for low-temperature refrigeration applications.

The invention also provides novel compositions which are azeotropes and can be used as R-404A, R-507 and R-22 drop-in substitutes, especially for low- temperature refrigeration applications.

According to the present invention, the use of a hydrofluorocarbon is provided in accordance with the claims.

Most preferably, the invention relates to the use of a hydrofluorocarbon composition which consists of
HFO-1234yf: 56.5 % wt, and
HFC-134a : 43.5 % wt
as a drop-in substitute for R-404A, R-507 and R-22.

The use of the hydrofluorocarbon compositions can be performed in a method for cooling an article which comprises condensing the hydrofluorocarbon compositions given above in an apparatus designed for the operation with R-404A or R-507 or R-22 and thereafter, evaporating the composition in the vicinity of the article to be cooled.

The use of the hydrofluorocarbon compositions can alternatively be performed in a method for heating an article which comprises condensing the compositions given above in an apparatus designed for the operation with R-404A or R-507 or R-22 in the vicinity of an article and thereafter, evaporating the hydrofluorocarbon composition.

The methods of cooling and heating can be performed with the hydrofluorocarbon compositions mentioned above in admixture with one or more additives, especially in admixture with at least one lubricant. Suitable lubricants are given below.

An especially preferred hydro fluorocarbon composition consists of
HFO-1234yf: equal to or more than 56.5 to equal to or less than 56.7 % wt, and
HFC- 134a : equal to or more than 43.3 to equal to or less than 43.5 % wt.

A most preferred hydrofluorocarbon composition consists of
HFO-1234yf: 56.5 % wt, and
HFC-134a : 43.5 % wt.

All the percentages given above are relative to the total weight of the composition.

It has been found, surprisingly, that the hydrofluorocarbon compositions according to the invention when used to replace R-404A and R-507 in existing refrigeration systems offer good oil return characteristics while maintaining good performance, in particular concerning COP and, consequently, energy consumption. The temperature glide of the hydrofluorocarbon compositions according to the invention is zero or practically zero, thereby, when the hydrofluorocarbon compositions, if desired together with at least one additive, especially together with at least one lubricant, are used as refrigerant, the superheat at the end of the evaporation process can be significantly decreased and hence the evaporation temperature lifted. The compositions can be safely used with refrigeration equipment designed for use with R-404A, R-507 and R-22.

The hydrofluorocarbon compositions according to the invention are generally non-flammable, especially when tested in accordance with ASHRAE Standard 34-2007. Non flammability is generally found both in liquid and vapor phases. Preferred hydrofluorocarbon compositions are non-flammable both in liquid and vapor phases in case of worst case fractionation scenario, for example according to ASHRAE Standard 34-2007.

The hydrofluorocarbon compositions according to the invention have generally a vapor pressure measured at 55°C equal or lower than about 25 bars absolute pressure. It has been found that the hydrofluorocarbon compositions having this pressure have particular heat transfer efficiency.

The hydrofluorocarbon compositions according to the invention have generally no temperature glide, or they have a temperature glide, defined as the temperature difference between the bubble point and the dew point at the boiling temperature and corresponding boiling pressure of the composition, which is lower than 0.1°C. For many of the hydrofluorocarbon compositions, it is approximately zero.

Table 1 here after gives the pressure temperature behavior and glide of a hydrofluorocarbon composition which consists of 56.5 % wt of HFO-1234yf and 43.5 % wt of HFC- 134a. The pressure temperature behavior of R-404A and R-507 is given for reference.

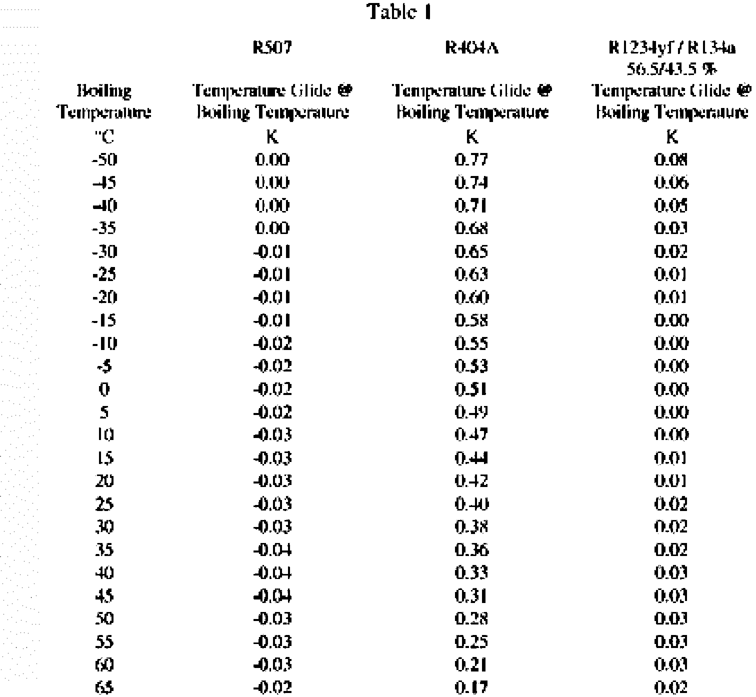

The hydro fluorocarbon compositions according to the invention may be combined for example, with additives or auxiliaries used in refrigeration such as in particular a lubricant to provide refrigerant compositions. Suitable lubricants include in particular those which are suitable for use with R-404A, R-507 or R-22. Examples of lubricants which can suitably be combined with the hydrofluorocarbon compositions according to the invention are selected from mineral oil, for example naphthenic mineral oils, alkylbenzene oils lubricants, and polyol ester oils or mixtures thereof.

When the hydrofluorocarbon compositions of HFO-1234yf and HFC-134a for use according to the invention are combined with an additive, in particular a lubricant, as described here before, the resulting composition is a refrigerant composition ; the hydrofluorocarbon compositions further containing an additive, especially the lubricant, i.e. the resulting refrigerant compositions, include the hydrofluorocarbon composition and the additive - which preferably is a lubricant - such that the weight ratio of hydrofluorocarbon composition/additive is generally from equal to or greater than 99: 1 to equal to or less than 80:20 (weight/weight) preferably from equal to or greater than 98.5: 1.5 to equal to or less than 95:5 (weight/weight).

A preferred apparatus which is designed for use with R-404A, R-507 or R-22 contains a refrigerant composition comprising a hydrofluorocarbon composition which consists of equal to or more than 56.3 to equal to or less than 56.7 % wt HFO-1234yf and equal to or more than 43.3 to equal to or less than 43.7 wt % HFC- 134a and wherein the components of the refrigerant composition add up to 100 % wt.

An especially preferred apparatus which is designed for use with R-404A or R-507 or R-22 contains a refrigerant composition which comprises a hydrofluorocarbon composition which consists of equal to or more than 56.5 to equal to less than 56.7 % wt HFO-1234yf, and
equal to or more than 43.3 to equal to or less than 43.5 % wt HFC- 134a, and wherein the components of the refrigerant composition add up to 100 % wt.

A most preferred apparatus which is designed for use with R-404A or R-507 or R-22 contains a refrigerant composition which comprises a hydrofluorocarbon composition which consists of 56.5 % wt HFO-1234yf and 43.5 % wt HFC- 134a wherein the components of the refrigerant composition add up to 100 % wt.

The apparatus which is designed for use with R-404A or R-507 or R-22 thus contains a refrigerant composition which also contains a lubricant. Lubricants are mentioned above; preferred lubricants are selected from the group consisting of mineral oil, alkylbenzene oil and polyol ester oils or mixtures thereof.

The refrigeration apparatus which is designed for use with R-404A or R-507 or R-22 according to the invention is preferably suitable for providing low-temperature refrigeration.

"Low temperature refrigeration" is understood to denote in particular cooling a body to be cooled to a temperature of from -45°C to -20°C. The refrigerant compositions according to the invention and the refrigeration apparatus according to the invention are particularly suitable for cooling a body to be cooled to a temperature of from -35°C to - 20°C.

The refrigerant compositions for use in the invention and the refrigeration apparatus for use in the invention are also suitable for "normal refrigeration", understood to denote in particular cooling a body to be cooled to a temperature of from greater than -20°C to +5°C.

In a particular embodiment, the refrigeration apparatus for use in the invention has been used with R-404A or R-507 or R-22, and R-404A or R-507 or R-22 have been replaced by the hydrofluorocarbon compositions for use in the invention. In a particular aspect of the refrigeration apparatus according to this embodiment, a lubricant, in particular as described above was used with R-404A or R-507 or R-22, and said lubricant has been at least partially kept in the apparatus for use with the composition.

The hydro fluorocarbon compositions for use in the invention are used as drop-in replacements for R-404A or R-507 or R-22.

Should the disclosure of any patents, patent applications, and publications which are incorporated herein by reference conflict with the description of the present application to the extent that it may render a term unclear, the present description shall take precedence.

The examples here after are intended to illustrate the invention without however limiting it.

### Example 1 (not in accordance with the invention) : Refrigeration with a composition

In an apparatus working with simple refrigeration cycle containing a composition which consists of 56.5 % wt HFO-1234yf and 43.5 % wt HFC-134a (hereafter also denoted as "composition"), evaporation of the refrigerant composition is carried out at -30°C and condensation is carried out at variable temperatures (30/ 35 / 40 / 45°C). Superheat is 5K and subcooling is 2K. The compressor efficiency at the different temperatures is given in the table 2 here after.

### Example 2 (comparison) : Refrigeration with prior art refrigerants

Following the same procedure as in example 1, the volumetric cooling capacity of R-404A and R-507 at different temperatures are given for comparison.

The results of examples 1 and 2 are shown in Table 2. It is apparent that the composition according to the invention comes the closest to the volumetric cooling capacity of R-404A and R-507 and is superior to the prior art non-ozone depleting R22 replacements.

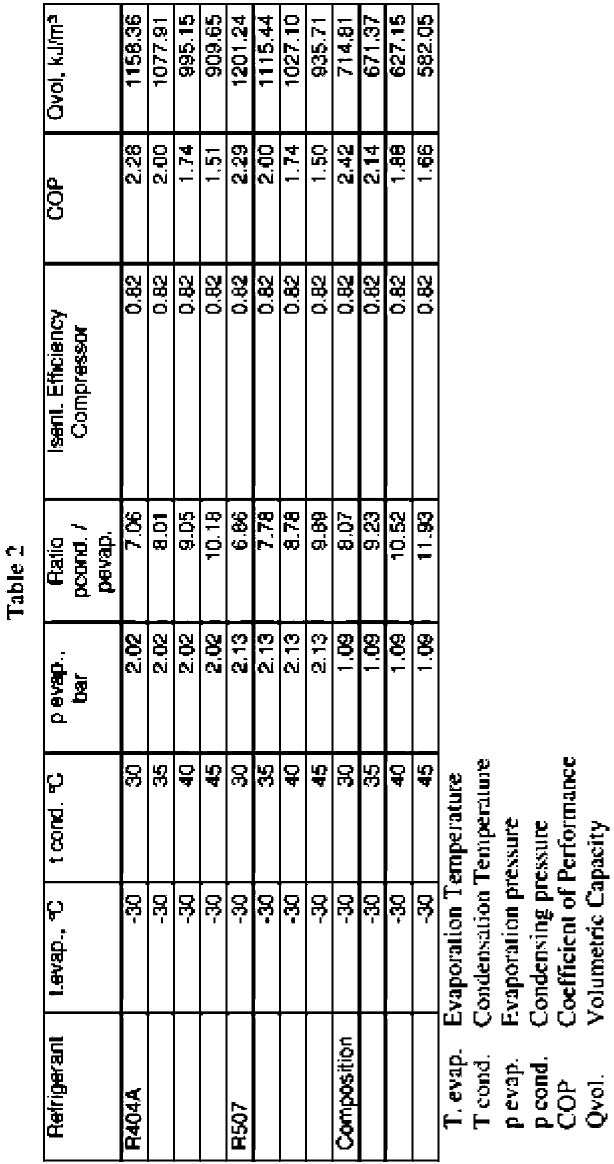

It can be seen from table 2 that the coefficient of performance (COP) of the azeotropic mixture is comparably high.

### Example 3 : Substitution of refrigerant R-404A

A refrigeration apparatus is operated using R-404A as a hydro fluorocarbon composition and using a mineral oil as lubricant. To substitute R-404A by the azeotropic hydrofluorocarbon composition of the invention, power of the refrigeration apparatus is switched off. The R-404A in the apparatus is recovered. The mineral oil is checked, and if necessary, it is removed. In this case, its amount is determined and compared with the recommended oil charge to determine approximately the quantity of oil left in the apparatus. The spent oil is replaced by the appropriate amount of fresh oil. If desired, the apparatus is run while performing the oil change procedure until the desired level of spent oil is achieved. A 24-hour leak test is performed by applying dry nitrogen. If the pressure after 24 hours has an acceptable residual level, vacuum is applied to the apparatus, and after having evacuated low boiling constituents in the apparatus, the appropriate amount of the azeotropic hydro fluorocarbon composition of HFC-1234yf and HFC-134a is filled into the apparatus, preferably in liquid form. The apparatus is run, the level of refrigerant and mineral oil is checked, and, if necessary, refrigerant and/or oil is added. A label is added to the apparatus.

## Claims

1. Use of a hydrofluorocarbon composition which consists of equal to or more than 56.3 to equal to or less than 56.7 wt% of HFO-1234yf and equal to or more than 43.3 to equal to or less than 43.7 wt% HFC-134a as a drop-in substitute for R-404A, R-507 or R-22.

2. The use of claim 1, wherein the hydrofluorocarbon composition consists of equal to or more than 56.5 wt% to equal to or less than 56.7 wt% of HFO-1234yf and equal to or more than 43.3 wt% to equal to or less than 43.5 wt% of HFC-134a, wherein the contents of HFO-1234yf and HFC-134a add up to 100 wt%.

3. The use of claim 2, wherein the hydrofluorocarbon composition consists of 56.5 wt% HFO-1234yf and 43.5 wt% of HFC-134a.

4. The use of any one of claims 1 to 3, wherein the hydrofluorocarbon composition is used in admixture with a lubricant.

5. The use of claim 4, wherein the lubricant is selected from the group consisting of mineral oil, alkylbenzene oil and polyol ester oil.

6. The use of claim 4 or claim 5, wherein the weight ratio of the hydrofluorocarbon composition to lubricant is from 99:1 to 80:20.

## Patentansprüche

1. Verwendung einer Fluorkohlenwasserstoff-Zusammensetzung, die aus 56.3-56.7 Gew.-% HFO-1234yf und 43.3-43.7 Gew.-% HFC-134a besteht, als Drop-In-Ersatz für R-404A, R-507 oder R-22.

2. Verwendung gemäß Anspruch 1, worin die Fluorkohlenwasserstoff-Zusammensetzung aus 56.5-56.7 Gew.-% HFO-1234yf und 43.3-43.5 Gew.-% HFC-134a besteht und die Anteile von HFO-1234yf und HFC-134a 100% ergeben.

3. Verwendung gemäß Anspruch 2, worin die Fluorkohlenwasserstoff-Zusammensetzung aus 56.5 Gew.-% HFO-1234yf und 43.5 Gew.-% HFC-134a besteht.

4. Verwendung gemäß mindestens einem der Ansprüche 1 bis 3, worin die Fluorkohlenwasserstoff-Zusammensetzung in Mischung mit einem Schmiermittel verwendet wird.

5. Verwendung gemäß Anspruch 4, worin das Schmiermittel ausgewählt ist aus Mineralöl, Alkylbenzolöl und Polyolesteröl.

6. Verwendung gemäß Anspruch 4 oder Anspruch 5, worin das Massenverhältnis von Fluorkohlenwasserstoff-Zusammensetzung zu Schmiermittel 99:1 bis 80:20 beträgt.

## Revendications

1. Utilisation d'une composition d'hydrofluorocarbone qui consiste en une quantité supérieure ou égale à 56,3 et inférieure ou égale à 56,7% en poids de HFO-1234yf et une quantité supérieure ou égale à 43,3 et inférieure ou égale à 43,7 % en poids de HFC-134a en tant que produit de substitution du R-404A, R-507 ou R-22.

2. Utilisation selon la revendication 1, dans laquelle la composition d'hydrofluorocarbone consiste en une quantité supérieure ou égale à 56,5 % en poids et inférieure ou égale à 56,7% en poids de HFO-1234yf et une quantité supérieure ou égale à 43,3% en poids et inférieure ou égale à 43,5% en poids de HFC-134a, dans laquelle les teneurs en HFO-1234yf et HFC-134a totalisent jusqu'à 100 % en poids.

3. Utilisation selon la revendication 2, dans laquelle la composition d'hydrofluorocarbone consiste en 56,5 % en poids de HFO-1234yf et 43,5 % en poids de HFC-134a.

4. Utilisation selon l'une quelconque des revendications 1 à 3, dans laquelle la composition d'hydrofluorocarbone est utilisée en mélange avec un lubrifiant.

5. Utilisation selon la revendication 4, dans laquelle le lubrifiant est sélectionné dans le groupe consistant en une huile minérale, une huile d'alkylbenzène et une huile d'ester de polyol.

6. Utilisation selon la revendication 4 ou la revendication 5, dans laquelle le rapport en poids entre la composition d'hydrofluorocarbone et le lubrifiant est de 99 : 1 à 80 : 20.
